Europäisches Patentamt

European Patent Office

Office européen des brevets

(11) Veröffentlichungsnummer: **0 459 229 A2**

(12) **EUROPÄISCHE PATENTANMELDUNG**

(21) Anmeldenummer: 91107893.9

(22) Anmeldetag: **16.05.91**

(51) Int. Cl.⁵: **F21V 7/22,** C08K 7/04, C08K 3/00, C08L 81/02

(30) Priorität: **29.05.90 DE 4017243**

(43) Veröffentlichungstag der Anmeldung: **04.12.91 Patentblatt 91/49**

(84) Benannte Vertragsstaaten: **DE ES FR GB IT**

(71) Anmelder: **BAYER AG**

**W-5090 Leverkusen 1 Bayerwerk(DE)**

(72) Erfinder: **Stahlke, Kurt-Rainer, Dr.**
**Amselweg 20**
**W-5067 Kürten 2(DE)**
Erfinder: **Döring, Joachim, Dr.**
**c/o Bayer Japan Ltd., 108 Takanawa 4-Chome**
**Minatoku, Tokyo 108(DE)**
Erfinder: **Rempel, Dieter, Dr.**
**Max-Beckmann-Strasse 35**
**W-5090 Leverkusen 1(DE)**

(54) **Polyarylensulfide zur Herstellung von Reflektoren.**

(57) Die Erfindung betrifft Formmassen aus neutralen Polyarylensulfiden (PAS), vorzugsweise aus Polyphenylensulfid (PPS) und daraus hergestellte reflektierende Gegenstänge wie Leuchten, vorzugsweise Scheinwerfer und Reflektoren.

Die Erfindung betrifft Formmassen aus neutralen Polyarylensulfiden (PAS), vorzugsweise aus Polyphenylensulfid (PPS) und daraus hergestellte reflektierende Gegenstände wie Leuchten, vorzugsweise Scheinwerfer und Reflektoren.

Aus der DE-A 3 907 473 ist bekannt, aus Polyarylensulfidformmassen Formkörper mit optisch hochwertigen Oberflächen herzustellen. Aus diesen Formmassen hergestellte Formkörper haben eine niedrige Schlagfestigkeit oder Biegefestigkeit. Werden diese Formmassen mit handelsüblichen Glasfasern ausgerüstet, ist dies mit einer Verminderung der Oberflächenqualität verbunden, was für viele optische Anwendungen nicht mehr ausreichend ist.

Es wurde nun gefunden, daß Polyarylensulfidformmassen sich zu Formkörpern mit optisch hochwertigen Oberflächen verarbeiten lassen und hohe Festigkeiten aufweisen, wenn diese neben üblichen Füllstoffen bestimmte anorganische Fasern und faserartige Füllstoffe enthalten.

Gegenstand der Erfindung sind daher Formmassen aus

A) 98 bis 19 Gew.-% Polyarylensulfiden, vorzugsweise Polyphenylensulfid,

B) 1 bis 80 Gew.-%, vorzugsweise 10-70 Gew.-%, besonders bevorzugt 40 bis 60 Gew.-% mineralischen Füllstoffen und

C) 1 bis 80 Gew.-%, vorzugsweise 1 bis 40 Gew.-%, insbesondere 5-20 Gew.-% anorganischen Fasern.

Die erfindungsgemäß eingesetzten Fasern zeigen eine Mohs'sche Härte von 2 bis 6, insbesondere von 4. Sie zeichnen sich dadurch aus, daß sie eine durchschnittliche Länge von 10-200 $\mu$m und eine Dicke von 0,2-2 $\mu$m aufweisen und kristallin sind (Whisker).

Aus den erfindungsgemäßen Formmassen lassen sich Formkörper herstellen, die deutlich verbesserte mechanische Eigenschaften aufweisen und überwiegend isotropes Verhalten zeigen.

Nach Verarbeitung der erfindungsgemäßen Formmassen mit üblichen Techniken wie Spritzguß bzw. Extrusion, können die so erhaltenen Gegenstände beispielsweise im Vakuum direkt metallisiert werden. Es ist nicht nötig, ihre Oberfläche vor dem Metallisieren z.B. zu lackieren. Eine in der Praxis übliche Plasmavorbehandlung verstärkt die Metallhaftung (z.B. von Aluminium) außerordentlich. Es werden optisch hochwertige Spritzgußkörper erhalten, die nach Aufbringen der üblichen Schutzlackierungen oder Versiegelung mit Siliziumverbindungen einem Temperatur- sowie Feuchtigkeitstest unterzogen werden. Nach den durchgeführten Tests zeigte sich keine Beeinflussung der Metallschicht.

Erfindungsgemäß verwendbare Polyarylensulfide (PAS), vorzugsweise Polyphenylensulfide für Komponente A sind bekannt (z.B. US-A 3 354 129, EP-A 171 021). Sie haben eine Viskosität von 0,5 bis 300 Pas, vorzugsweise 26 bis 100 Pas. Die Messungen der Viskosität werden in einem Weisenberg Rheogoniometer bei 310° C und einer Schergeschwindigkeit von $10^3$ sec$^{-1}$ durchgeführt. Das PAS ist vorzugsweise neutral, d.h. nach Einbringen in entionisiertes (z.B. destilliertes) Wasser stellt sich ein pH-Wert von 6-8.5, vorzugsweise 6.5-7.5, besonders bevorzugt 6.7 bis 7.2 ein.

Als Füllstoffe der Komponente B dienen mineralische Füllstoffe und Füllstoffe mit geringer Mohs'scher Härte. Sie haben Härtegrade von 4-6 auf der Mohs'schen Härteskala. Geeignete mineralische Füllstoffe haben vorzugsweise annhähernd kugelförmige Gestalt. Als Füllstoffe und Füllstoffkombinationen finden übliche bekannte Substanzen Verwendung. Erfindungsgemäß werden diesen Füllstoffen als Komponente C anorganische Fasern (Whiskers) in den oben beschriebenen Mengen zugesetzt. Als Whiskers eignen sich Alkali- sowie Erdalkalisalze anorganischer Säuren, insbesondere $K_2Ti_2O_5$, $K_2Ti_4O_9$, $K_2Ti_6O_{13}$, $CaSO_4$ Anhydrid, $Ca_3Si_3O_9$ Wollastonit.

Aus den erfindungsgemäßen Formmassen hergestellte Formkörper können z.B. im Vakuum nach üblichen Methoden mit Metallen, z.B. Aluminium bedampft werden. Vorzugsweise werden Metalle im Anschluß an eine Plasmavorbehandlung im Hochvakuum aufgedampft.

Die erfindungsgemäßen Abmischungen eignen sich in vorteilhafter Weise zur Herstellung von Spritzgußkörpern mit hochwertigen optischen Oberflächen, die nach Direktmetallisierung z.B. als Leuchten wie Reflektoren, Scheinwerfern, Spot Lights etc. eingesetzt werden.

Beispiel 1

Mischung, bestehend aus

59,5 %    Polyphenylensulfid, Viskosität 30 bis 35 Pa.s, gemessen bei 310°C und einer Schergeschwindig- keit von 1000 $sec^{-1}$

40 %    Glasfasern Durchmesser 10 µm

0,5 %    Gleit- und Entformungsmittel: Montansäureester (E-Wachs)

ergibt folgende Eigenschaften:

| | | |
|---|---|---|
| Biegefestigkeit: | 280 MPa | nach DIN 53 452 |
| Schlagzähigkeit: | 40 $kJ/m^2$ | nach ISO 180 Meth. 1C |
| Oberflächenbewertung | | |
| Glanzmessung: | 50 | nach DIN 67 530 |
| visuelle Bewertung | | |
| nach Metallisierung: | 10 | 1 = gut, 10 = schlecht |

Beispiel 2

Mischung, bestehend aus

39,5 %    Polyphenylensulfid, Viskosität 30 bis 35 Pa.s, gemessen bei 310°C und einer Schergeschwindig- keit von 1000 $sec^{-1}$

60 %    mineralischem Füllstoff ($CaCO_3/MgCO_3$)

0,5 %    Gleit- und Entformungsmittel wie in Beispiel 1

ergibt folgende Eigenschaften:

| | | |
|---|---|---|
| Biegefestigkeit: | 80 MPa | nach DIN 53 452 |
| Schlagzähigkeit: | 6 $kJ/m^2$ | nach ISO 180 Meth. 1C |
| Oberflächenbewertung | | |
| Glanzmessung: | 115 | nach DIN 67 530 |
| visuelle Bewertung | | |
| nach Metallisierung: | 1 | 1 = gut, 10 = schlecht |

Beispiel 3

Mischung, bestehend aus

47,5 %  Polyphenylensulfid, Viskosität 30 bis 35 Pa.s, gemessen bei 310°C und einer Schergeschwindigkeit von 1000 sec$^{-1}$

15 %  Glasfasern Durchmesser 10 µm

37 %  mineralischem Füllstoff ($CaCO_3/MgCO_3$)

0,5 %  Gleit- und Entformungsmittel wie in Beispiel 1

ergibt folgende Eigenschaften:

| | | |
|---|---|---|
| Biegefestigkeit: | 130 MPa | nach DIN 53 452 |
| Schlagzähigkeit: | 12 kJ/m$^2$ | nach ISO 180 Meth. 1C |
| Oberflächenbewertung | | |
| Glanzmessung: | 80 | nach DIN 67 530 |
| visuelle Bewertung | | |
| nach Metallisierung: | 6 | 1 = gut, 10 = schlecht |

## Beispiel 4

Mischung, bestehend aus

47,5 %  Polyphenylensulfid, Viskosität 30 bis 35 Pa.s, gemessen bei 310°C und einer Schergeschwindigkeit von 1000 sec$^{-1}$

15 %  Kaliumtitanat-Whiskers Durchmesser 0,2 bis 0,5 µm, Länge 10 bis 20 µm

37 %  mineralischem Füllstoff ($CaCO_3/MgCO_3$)

0,5 %  Gleit- und Entformungsmittel wie in Beispiel 1

ergibt folgende Eigenschaften:

4

```
Biegefestigkeit:        115 MPa    nach DIN 53 452
Schlagzähigkeit:        10 kJ/m²   nach ISO 180 Meth. 1C
Oberflächenbewertung
Glanzmessung:           95         nach DIN 67 530
visuelle Bewertung
nach Metallisierung:    2          1 = gut, 10 = schlecht
```

Beispiel 5

Mischung, bestehend aus

59,5 %      Polyphenylensulfid, Viskosität 30 bis 35 Pa.s, gemessen bei 310°C und einer Schergeschwindigkeit von 1000 $sec^{-1}$

30 %        Kaliumtitanat-Whiskers Durchmesser 0,2 bis 0,5 µm, Länge 10 bis 20 µm

10 %        mineralischem Füllstoff ($CaCO_3/MgCO_3$)

0,5 %       Gleit- und Entformungsmittel wie in Beispiel 1

ergibt folgende Eigenschaften:

```
Biegefestigkeit:        220 MPa    nach DIN 53 452
Schlagzähigkeit:        25 kJ/m²   nach ISO 180 Meth. 1C
Oberflächenbewertung
Glanzmessung:           110        nach DIN 67 530
visuelle Bewertung
nach Metallisierung:    1          1 = gut, 10 = schlecht
```

Beispiel 6

Mischung, bestehend aus

```
47,5 %    Polyphenylensulfid, Viskosität 30 bis 35 Pa.s,
          gemessen bei 310°C und einer Schergeschwindig-
          keit von 1000 sec⁻¹
15 %      CaSO₄-Whiskers Durchmesser 2 µm, Länge 150 bis
          200 µm
37 %      mineralischem Füllstoff (CaCO₃/MgCO₃)
0,5 %     Gleit- und Entformungsmittel wie in Beispiel
          1
```

ergibt folgende Eigenschaften:

```
Biegefestigkeit:       110 MPa    nach DIN 53 452
Schlagzähigkeit:        12 kJ/m²  nach ISO 180 Meth. 1C
Oberflächenbewertung
Glanzmessung:          110        nach DIN 67 530
visuelle Bewertung
nach Metallisierung:     2         1 = gut, 10 = schlecht
```

**Patentansprüche**

1.  Formmassen aus
    A) 98 bis 19 Gew.-% Polyarylensulfiden,
    B) 1 bis 80 Gew.-% mineralischen Füllstoffen und
    C) 1 bis 80 Gew.-% anorganischen Fasern (Whiskers).

2.  Formkörper und Extrudate nach Anspruch 1, dadurch gekennzeichnet, daß diese im Vakuum mit Metall bedampft werden.

3.  Formkörper und Extrudate nach Anspruch 1, dadurch gekennzeichnet, daß als Metall Aluminium verwendet wird.

4.  Formkörper und Extrudate nach Anspruch 1, dadurch gekennzeichnet, daß eine Plasmavorbehandlung vorgenommen wird.

5.  Verwendung von Formmassen gemäß Anspruch 1 zur Herstellung von Leuchten.